# EUROPÄISCHE PATENTSCHRIFT

(11) **EP 2 232 115 B1**
(45) Veröffentlichungstag und Bekanntmachung des Hinweises auf die Patenterteilung: **07.09.2011**
(21) Anmeldenummer: 08871615.4
(22) Anmeldetag: 08.12.2008
(51) Int. Cl.: F16K 31/06

(54) **DRUCKREGELVENTILVORRICHTUNG**
PRESSURE CONTROL VALVE DEVICE
DISPOSITIF FORMANT SOUPAPE DE RÉGULATION DE PRESSION

(30) Priorität: 21.01.2008 DE 102008000106
(43) Veröffentlichungstag der Anmeldung: 29.09.2010
(73) Patentinhaber: ZF Friedrichshafen AG, 88038 Friedrichshafen (DE)
(72) Erfinder: MAYR, Karlheinz, A-6900 Bregenz (AT); MOOSMANN, Markus, 88214 Ravensburg (DE); HAMMA, Frank, 88094 Oberteuringen (DE); REMMLINGER, Hubert, 88046 Friedrichshafen (DE)
(86) Internationale Anmeldenummer: PCT/EP2008/066983
(87) Internationale Veröffentlichungsnummer: WO 2009/092488

(56) Entgegenhaltungen:
- WO-A-02/06911
- WO-A-2005/026858
- DE-A1- 3 902 466
- DE-A1-102004 059 119
- US-A- 5 104 091
- US-A1- 2005 067 028
- US-B1- 6 343 672

## Beschreibung

Die Erfindung betrifft eine Druckregelventilvorrichtung gemäß der im Oberbegriff des Patentanspruches 1 näher definierten Art.

Bei aus der Praxis bekannten Kraftfahrzeug-Automatgetrieben werden als nasslaufende Lamellenkupplungen oder Lamellenbremsen ausgeführte Schaltelemente zur Drehmomentübertragung zwischen einem Getriebeeingang und einem Getriebeausgang eingesetzt. Die Kraftübertragung erfolgt dabei reibschlüssig mittels einer Verpressung von Lamellenpaketen der Schaltelemente. Die für das Verpressen der Lamellenpakete jeweils erforderliche Anpresskraft wird meist über hydraulische betätigte Kupplungskolben erzeugt, die mittels Druckregelventilen und Kupplungsventilen aktuiert werden. Derartige auch als Druckminderventile bezeichnete Kupplungsventile werden entweder direkt über einen Proportionalmagnet oder über weitere Druckbegrenzungsventile, mittels welchen ein Vorsteuerdruck in Abhängigkeit eines Steuerstromes eingestellt wird, entsprechend betätigt.

Bei beiden Vorgehensweisen zur Betätigung der Druckregelventile wird jeweils eine ansteuerstromproportionale Magnetkraft erzeugt, in deren Abhängigkeit die hydraulischen Druckminderventile bzw. Kupplungsventile betätigt werden. Die Arbeitsdrücke der Kupplungsventile ergeben sich jeweils aus der Gleichgewichtsbedingung zwischen der ansteuerstromproportionalen Magnetkraft bzw. der Aktuierungskraft und der Rückführkraft bzw. der Reaktionskraft eines Kupplungsventils.

Insbesondere über Vorsteuerdrücke betätigte Druckregelventile sind oftmals mit zwei in hydraulischer Halbbrückenschaltung angeordneten Sitzventile ausgebildet, die als sogenannte Closed-End-Druckregler bezeichnet werden. Derartige Closed-End-Druckregler sind in ihren Endstellungen durch eine geringe Leckage gekennzeichnet, da die Ventilkanten der Sitzventile in den Endstellungen wechselseitig geschlossen sind. Damit besteht trotz einer hohen Anzahl hydraulisch anzusteuernder Schaltelemente eines Automatgetriebes die Möglichkeit, den Hydraulikfluidvolumenbedarf eines Hydrauliksystems eines Kraftfahrzeug-Automatgetriebes auf ein Minimum zu begrenzen und eine entsprechend klein dimensionierte Hydraulikpumpe einsetzen zu können.

Um Auswirkungen von Druckschwankungen im Bereich zwischen den beiden Ventilsitzen eines Closed-End-Druckreglers zu verringern ist in diesem Bereich üblicherweise ein Stromführungselement sowie ein zusätzliches externes Dämpfungselement vorgesehen. Das Stromführungselement lenkt das zwischen den beiden Sitzventilen strömende Hydraulikfluid bereichsweise vom direkten Strömungsweg ab, um Venturieffekte zwischen den Sitzventilen und dem Verbraucheranschluss zu vermeiden, wobei die definierte Stromführung einen hydraulischen Widerstand in unerwünschtem Umfang erhöht und eine Ventildynamik nachteilig beeinflusst. Ein Closed-End-Druckregler mit einem Strömungsführungselement ist beispielsweise aus der WO 2005/026858 A1 bekannt.

Das Dämpfungselement weist zur Dämpfung der Druckschwankungen ein in Abhängigkeit des im letztgenannten Bereich eines Closed-End-Druckreglers aktuell vorliegenden Druckwertes verschiebbares Kolbenelement auf. Das Kolbenelement ist bei einer druckformstabilen Ausführung in einem Zylindergehäuse gegen eine Federeinrichtung längsverschieblich geführt, wobei sich Druckspitzen im Closed-End-Druckregler in Abhängigkeit der sich druckabhängig verändernden Kolbenelementposition selbsttätig abbauen.

Zusätzlich oder alternativ hierzu ist das Kolbenelement des Dämpfungselementes druckabhängig elastisch verformbar ausführbar und verformt sich in Abhängigkeit des im Closed-End-Druckregler vorherrschenden Druckes mehr oder weniger stark, so dass sich Druckspitzen im Closed-End-Druckregler durch eine druckabhängige Verformung und/oder in Abhängigkeit der druckabhängige Verformung und/oder in Abhängigkeit der druckabhängig variierenden Kolbenelementposition jeweils im gewünschten Umfang abgebaut werden.

Mit Dämpfungselementen ausgebildete Closed-End-Druckregler sind jedoch nachteilhafterweise durch einen hohen konstruktiven Aufwand gekennzeichnet, wodurch deren Herstellkosten im Vergleich zu Druckreglern, die ohne Dämpfungselemente ausgebildet sind, in unerwünschtem Umfang ansteigen.

Bei der Gestaltung der vorbeschriebenen Closed-End-Druckregler bilden die Anforderungen an eine hohe Stelldynamik bei gleichzeitig geringer Leckage ein Spannungsfeld, welches nur durch das Eingehen von Kompromissen auflösbar ist. Die geometrische Ausgestaltung des als Kugelsitz ausgeführten ersten Sitzventils legt die maximale Leckage bzw. den maximal über den Closed-End-Druckregler führbaren Volumenstrom fest, wenn das zweite Sitzventil, welches oftmals als Kegel- oder Flachsitz ausgeführt ist, wesentlich größer dimensioniert ist. Der vorzugsweise als Kugel ausgeführte Ventilkörper des ersten Sitzventils wird durch eine Stößelstange bzw. einen Ventilstößel betätigt, welche nach dem Öffnen des ersten Sitzventils den offenen Querschnitt der Zulaufgeometrie des Closed-End-Druckreglers unabhängig von der Schieberposition zwischen der Drossel bzw. Blende des ersten Sitzventils und der Stößeistange freigibt.

Die vorbeschriebenen Closed-End-Druckregler weisen bei niedrigen Öltemperaturen aufgrund der dann höheren Viskosität des Hydraulikfluids einen stark verminderten Zulaufvolumenstrom auf, womit sich die Ventildynamik, insbesondere der vorgesteuerten Kupplungsventile, reduziert. Eine Kompensation der temperaturabhängigen Reduzierung der Ventildynamik durch eine größere Zulaufgeometrie der Closed-End-Druckregler ist dabei nicht oder nur teilweise sinnvoll, da die Closed-End-Druckregler dann bei hohen Betriebstemperaturen des Hydraulikfluides einen unerwünscht hohen Leckagefluidvolumenstrom aufweisen.

Aus der DE 39 02 466 A1 ist ein Brennstoff-Drucksteuerventil bekannt, das zur Einregelung eines Druckes eines Brennstoffes in einem Brennstoffeinspritzsystem eines Fahrzeugs dient. In dem Drucksteuerventil befindet sich eine Membran, welche einen Gehäuseinnenraum des Drucksteuerventils in eine von Brennstoff durchflossene Brennstoffkammer und eine brennstofffreie Druckkammer aufteilt. Brennstoff wird durch jeweils eine Rohrleitung in die Brennstoffkammer ein- und ausgeleitet. An der Mündung der Brennstoff ausleitenden Rohrleitung befindet sich ein Brennstoffkanal mit einem in Richtung der Brennstoffkammer gerichteten Ventilsitz, der durch eine Kugel verschließbar ist. Die Kugel ist dabei zwischen zwei Federn gehalten, wobei die eine Feder in der ausleitenden Rohrleitung zum Anheben der Kugel von dem Ventilsitz angeordnet ist und die andere der Federn in der Druckkammer zum Niederdrücken der Kugel auf den Ventilsitz angeordnet ist, wodurch in Abhängigkeit eines an dem Drucksteuerventil anliegenden Brennstoffdruckes eine vorgegebene Brennstoffströmungsmenge durch das Drucksteuerventil geleitet werden. Zur Erzielung einer guten Charakteristik für Strömungsrate/Druck sind in dem Brennstoffkanal hierbei Hilfsbrennstoffkanäle zur Erzeugung einer Wirbelströmung vorgesehen.

Der vorliegenden Erfindung liegt daher die Aufgabe zugrunde, eine Druckregelventilvorrichtung zur Verfügung zu stellen, die durch eine hohe Ventildynamik bei gleichzeitig geringer Leckage gekennzeichnet ist und konstruktiv einfach ausgestaltet wurde.

Erfindungsgemäß wird diese Aufgabe mit einer Druckregelvorrichtung gemäß den Merkmalen des Patentanspruches 1 gelöst.

Die erfindungsgemäße Druckregelventilvorrichtung ist mit wenigstens einem Zulaufbereich und einem ersten Ablaufbereich und mindestens einem zweiten Ablaufbereich ausgebildet, die über zwei Sitzventile miteinander verbindbar sind. Stromauf des zwischen dem ersten Ablaufbereich und dem zweiten Ablaufbereich angeordneten zweiten Sitzventils ist eine Stromführungseinrichtung mit einem Einlaufbereich und einem in axialer Erstreckung der Stromführungseinrichtung dazu beabstandeten Auslaufbereich zur definierten Strömungsführung von aus dem Zulaufbereich in Richtung des zweiten Sitzventils strömenden Fluids ausgebildet.

Erfindungsgemäß ist die Stromführungseinrichtung mit mehreren voneinander getrennten Kanalbereichen derart versehen, dass das durch die Kanalbereiche der Stromführungseinrichtung in Richtung des zweiten Sitzventils strömende Fluid stromab des Auslaufbereiches in einen Drall versetzt wird. Vorteilhafterweise können dabei die Kanalbereiche dem in Richtung des zweiten Sitzventils strömenden Fluid stromab des Auslaufbereiches eine wenigstens annähernd strudelförmige Strömung aufprägen.

Damit wird der Fluidströmung zwischen den beiden Sitzventilen ein derartiger Drall aufgeprägt, dass das strömende Fluid im Vergleich zu aus der Praxis bekannten Druckregelventilen ein stabileres Strömungsverhalten aufweist. Dies resultiert aus der Tatsache, dass im Bereich der Krümmungen und Umlenkungen durch die Kanalbereiche zusätzlich ein wesentlicher Teil der Strömungsenergie in Drallenergie umgewandelt wird. Damit weist das strömende Fluid in Hauptströmungsrichtung, d. h. in Richtung des zweiten Sitzventils, im Vergleich zu herkömmlich ausgeführten Druckregelventilvorrichtungen eine Kreiselbewegung der Fluidteilchen des Fluids auf, woraus sich ein rückwirkungsfreieres Verhalten der Strömung und damit eine größere Dämpfung als bei herkömmlichen Druckregelventilvorrichtungen einstellt.

Zudem werden Anregungen sowie Störungen durch Druckschwankungen im Zulaufbereich sowie im ersten Ablaufbereich aufgrund der Einleitung in die drallbehaftete Strömung und während der Durchströmung der Stromführungseinrichtung aufgrund eines Störenergieabbaus verringert, wobei ein tangentialer Auftreffwinkel der Stromfäden des strömenden Hydraulikfluides im Bereich des zweiten Sitzventils eine indirektere Druckfortpflanzung in Strömungsrichtung und somit ein stabilisierendes Verhalten erreicht wird.

Zusätzlich werden bei der erfindungsgemäßen Druckregelventilvorrichtung Schwingungsanregungen durch einen beispielsweise die Sitzventile betätigenden Proportionalmagneten infolge der Kreiselbewegung der Fluidteilchen des Fluids in Strömungsrichtung im Vergleich zu herkömmlichen Ventilvorrichtungen besser gedämpft und Störungen zwischen dem Eingangssignal und dem Ausgangssignal werden besser unterdrückt sowie ein Entlüftungsverhalten der Druckregelventilvorrichtung bei eingeschlossener Luft verbessert.

Grundsätzlich bietet die strudelförmige Strömung des die Druckregelventilvorrichtung durchströmenden Hydraulikfluidvolumenstromes bzw. der dem Hydraulikfluid aufgeprägte Drall den Vorteil, dass das Fluid mit geringem Strömungswiderstand in Richtung des zweiten Sitzventils geführt wird und im Bereich des zweiten Sitzventils tangential auf die Dichtfläche eines Ventilschließelementes des zweiten Sitzventils und den zweiten Ventilsitz auftritt. Dadurch ist die Druckregelventilvorrichtung mit geringen Ansprechzeiten und einer hohen Ventildynamik betreibbar. Zudem hat die temperaturabhängige Reduzierung des Zulaufvolumenstromes auch geringere Auswirkungen auf die Ventildynamik als bei aus dem Stand der Technik bekannten Ventileinrichtung, womit eine Zulaufgeometrie der erfindungsgemäßen Druckregelventilvorrichtung auf ein erforderliches Minimum auslegbar ist und der ebenfalls temperaturabhängige Leckageölvolumenstrom auf einfache Art und Weise begrenzt ist.

Des Weiteren werden durch den dem Hydraulikfluid im Bereich der Stromführungseinrichtung aufgeprägten Strömungsdrall Abweichungen von einer symmetrischen Strömung des Hydraulikfluides in der Druckregelventilvorrichtung reduziert und an dem Ventilschließelement und einen das Schließelement betätigenden Ventilstößel angreifende fluidische Querkräfte auf konstruktiv einfache und kostengünstige Art und Weise herabgesetzt, welche die Funktionsweise der Druckregelventilvorrichtung mit steigenden Werten zunehmend nachteilig beeinflussen. Die Beeinträchtigung der Funktionsweise der Druckregelventilvorrichtung resultiert aus von den Querkräften verursachten Reibkräften, die im Bereich von Lagerungen des Ventilstößels auftreten und eine Hysterese der Druckregelventilvorrichtung vergrößern.

Die erfindungsgemäße Druckregelventilvorrichtung ist im Vergleich zu herkömmlichen Ventilvorrichtungen bei niedrigen Betriebstemperaturen auch durch kurze Sprungantwortzeiten gekennzeichnet. Im Stabilitätsvergleich ist die Druckregelventilvorrichtung durch eine stärkere Dämpfung und dadurch ein schnelleres Abklingverhalten beim Normsprung gekennzeichnet, wobei die Druckregelventilvorrichtung auch ohne die Herstellkosten erhöhende separate Dämpfungseinrichtung betreibbar ist und ein Sitzprellen im Bereich des zweiten Sitzventils vermieden ist.

Die Führungsfrequenzgänge sind im Bereich der Lastübernahme durch eine höhere Eckfrequenz gekennzeichnet, wobei diese temperaturunabhängig ist. Zusätzlich wird bei der erfindungsgemäßen Druckregelventilvorrichtung trotz des Dämpferentfalls bei der Lastübernahme tendenziell eine bessere Störunterdrückung erreicht. Innerhalb der Stromführungseinrichtung und im Bereich des zweiten Sitzventils ist die Druckregelventilvorrichtung im Vergleich zu herkömmlichen Ventilvorrichtungen durch eine geringere Anzahl an Totzonen und durch eine reduzierte Wirbelbildung gekennzeichnet.

Es ist günstig, wenn die Kanalbereiche wenigstens annähernd schraubenförmig gemäß einer mehrgängigen Schraube ausgebildet sind. Hierbei können die Kanalbereiche entlang der Fliessrichtung des Fluids gleichgerichtet gekrümmt ausgeführt sein oder auch abhängig von der Ausrichtung der Kanalbereiche relativ zur Längsachse der Stromführungseinrichtung und Länge der Kanalbereiche in erster Näherung an eine mehrgängigen Schraube geradlinig ausgerichtet sein.

Bei einer vorteilhaften Weiterbildung der Druckregelventilvorrichtung nach der Erfindung wird das Fluid mit im Wesentlichen laminarer Strömung durch die Kanalbereiche geführt, womit der Durchflusswiderstand der Druckregelventilvorrichtung im Vergleich zu bekannten Druckregelventilen, bei welchen das Hydraulikfluid oft unerwünschte und den Durchflusswiderstand erhöhende Verwirbelungen und Rückströmungen aufweist, minimiert wird.

Der Durchflusswiderstand der Druckregelventilvorrichtung wird bei einer vorteilhaften Weiterbildung dadurch reduziert, dass die Kanalbereiche durch Stegbereiche voneinander getrennt sind, deren Stegdicken sich vom Einlaufbereich bis zum Auslaufbereich stetig verjüngen, wobei die Stirnflächen der Stegbereiche im Einlaufbereich bei weiteren vorteilhaften Ausführungsformen der erfindungsgemäßen Druckregelventilvorrichtung abgerundet ausgebildet sind, um den Durchflusswiderstand erhöhende Verwirbelungen des Hydraulikfluides im Einlaufbereich der Stromführungseinrichtung gering zu halten oder zu vermeiden.

Eine weitere vorteilhafte Ausführungsform der Druckregelventilvorrichtung nach der Erfindung ist zwischen dem Auslaufbereich der Stromführungseinrichtung und dem zweiten Sitzventil mit einem Düsenbereich ausgeführt, mittels welchem die strudelförmige Strömung des Hydraulikfluides in Form einer dünnfilmigen Strömung im Bereich der Düsenaußenfläche definiert in Richtung des Ventilsitzes des zweiten Sitzventils führbar ist, wobei sich der Düsenbereich bei einer Weiterbildung der Druckregelventilvorrichtung ausgehend vom Auslaufbereich in Richtung des zweiten Ventilsitzes kegelförmig verjüngt und die wandgeführten Stromfäden möglichst harmonisch vom Auslaufbereich der Stromführungseinrichtung in Richtung des Ventilsitzes des zweiten Sitzventils geführt werden und eine möglichst verlustfreie Drallaufprägung realisierbar ist.

Eine ausreichende Dämpfung von Druckschwingungen bei gleichzeitig niedrigem Durchflusswiderstand wird bei weiteren vorteilhaften Ausführungsformen der erfindungsgemäßen Druckregelventilvorrichtung dadurch erreicht, dass sich an den verjüngenden Durchmesserbereich des Düsenbereiches ein wenigstens annähernd hohlzylindrischer Übergangsbereich anschließt, an welchen sich wiederum ein optionaler Diffusorbereich anschließt, der in den zweiten Ventilsitz übergeht, da den im Düsenbereich wandgeführten Stromfäden des Hydraulikfluides weitere sanfte Umlenkungen ohne den Drall bzw. die strudelartige Strömung wesentlich zu beeinflussen aufprägbar sind und somit Druckschwankungen ohne einen Durchflusswiderstand wesentlich zu erhöhen weiter gedämpft werden können.

Bei einer kostengünstig und fertigungstechnisch einfach herstellbaren Ausführungsform der Druckregelvorrichtung ist der Düsenbereich und der die Kanalbereiche aufweisende Teil der Stromführungseinrichtung aus unterschiedlichen Materialien hergestellt, wobei der Düsenbereich und der die Kanalbereiche aufweisende Teil der Stromführungseinrichtung bei einer weiteren einfach zu montierenden Ausführungsform der Druckregelventilvorrichtung vorzugsweise über eine Clipsverbindung miteinander verbindbar sind.

Bei einer vorteilhaften Weiterbildung der Druckregelventilvorrichtung nach der Erfindung durchströmt das Fluid den Ventilsitz des zweiten Sitzventils wenigstens annähernd in der Tangentialebene eines mit dem zweiten Ventilsitz zusammenwirkenden Bereiches einer Dichtfläche eines Ventilschließgliedes, womit eine erhebliche Reduzierung der Sitzprellgefahr im Bereich des zweiten Sitzventils erreicht wird und sowohl ein verlustärmerer Austritt im Bereich des Ventilsitzes sowie ein hochdynamisches Verhalten der Druckregelventilvorrichtung speziell bei niedrigen Betriebstemperaturen des Hydraulikfluides erreicht wird.

Eine die Funktionsweise auf konstruktiv einfache Art und Weise gewährleistende Ausführungsform der Druckregelventilvorrichtung ist dadurch gekennzeichnet, dass ein mit dem Ventilschließglied wirkverbundener Ventilstößel im Bereich des die Kanalbereiche aufweisenden Teils der Stromführungseinrichtung längsbeweglich geführt ist, da am Ventilstößel angreifende Querkräfte somit auf einfache Art und Weise im Bereich mehrerer zueinander beabstandeter Stützstellen abstützbar sind und die Beweglichkeit des Ventilstößels beeinträchtigende Verkantungen und Schrägstellungen des Ventilstößels vermieden sind.

Bei einer weiteren vorteilhaften Ausgestaltung der erfindungsgemäßen Druckregelventilvorrichtung ist das erste Sitzventil mit einem Kugelsitz ausgebildet und eine den Ventilsitz ausbildende Blende ist mit einer Blendendicke kleiner als 0,4 mm, vorzugsweise kleiner als 0,3 mm, ausgeführt, womit eine Spreizung des Volumenstromes über den Temperaturbereich im Vergleich zu herkömmlich ausgeführten Druckregelventilvorrichtungen reduziert ist und die Temperaturabhängigkeit der Ventilcharakteristik verringert ist.

Ist das zweite Sitzventil mit einem Kegelsitz ausgeführt, liegt bei gleichem Regeldruck des mit dem Ventilsitz zusammenwirkenden Ventilschließgliedes im Vergleich zu einem Kugelsitz oder einem Flachsitz ein größerer Öffnungshub vor, wodurch im Vergleich zu einem Kugel- oder Flachsitz der die Ventildynamik verbessernde Dralleffekt der Strömung des Hydraulikfluids weiter verstärkt wird. Des Weiteren ist die Strömung des Hydraulikfluids bei Vorliegen eines mit einem Kegelsitz ausgeführten Sitzventils mit einem geringen Durchflusswiderstand tangential zur Sitzfläche des zweiten Sitzventils führbar.

Grundsätzlich sind die vorbeschriebenen Vorteile der erfindungsgemäßen Druckregelventilvorrichtung auch bei einer Ausführung des zweiten Sitzventils mit einem Kugelsitz oder einem Flachsitz erzielbar.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen, wobei zu Gunsten der Übersichtlichkeit in der Beschreibung der Ausführungsbeispiele für bau- und funktionsgleiche Bauteile dieselben Bezugszeichen verwendet werden.

Es zeigt:
- Fig. 1: eine schematisierte Längsschnittansicht einer Druckregelventilvor- richtung;
- Fig. 2: eine Einzelansicht einer ersten Ausführungsform einer Stromfüh- rungseinrichtung der Druckregelventilvorrichtung gemäß Fig. 1;
- Fig. 3: eine Einzelansicht einer zweiten Ausführungsform der Stromfüh- rungseinrichtung der Druckregelventilvorrichtung gemäß Fig. 1;
- Fig. 4: eine dreidimensionale Schnittansicht der Stromführungseinrich- tung gemäß Fig. 3; und
- Fig. 5: einen grafischen Vergleich zwischen der Durchflussmenge in ei- nem herkömmlichen Kupplungsventil und der Druckregelvorrich- tung gemäß Fig. 1 über dem Ansteuerstrom der Aktoreinrichtung des Kupplungsventils bzw. der Druckregelventilvorrichtung.

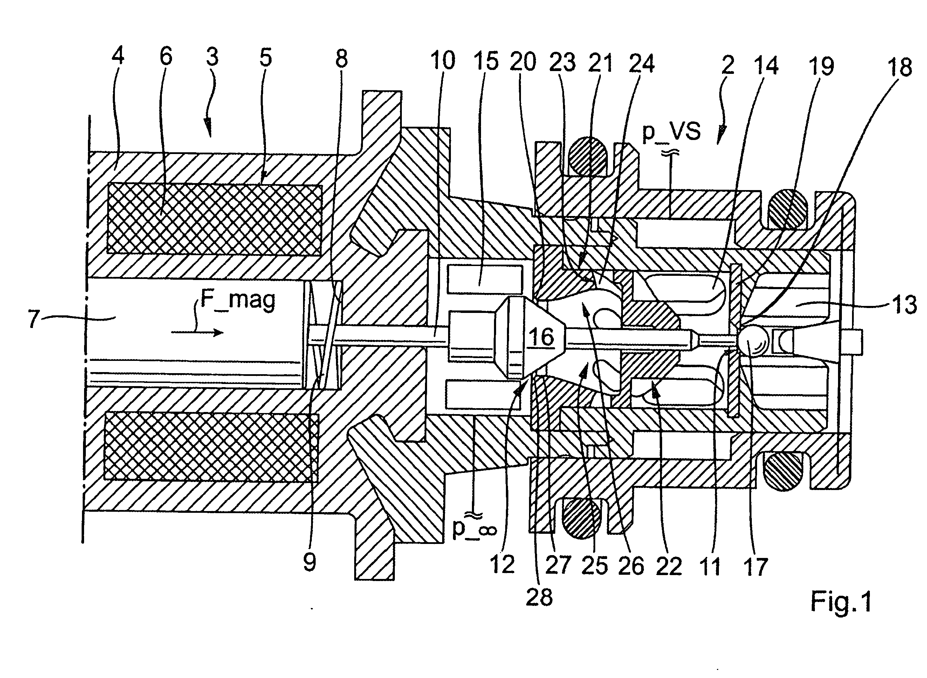

In Fig. 1 ist eine Druckregelventilvorrichtung 1 eines Hydrauliksystems zum Einstellen eines angeforderten Betriebszustandes eines Kraftfahrzeug-Automatgetriebes in einer schematisierten Längsschnittansicht gezeigt, die eine Ventileinrichtung 2 und eine die Ventileinrichtung 2 in der später beschriebenen Art und Weise betätigende Aktoreinrichtung 3 umfasst. Die in der Zeichnung dargestellte Druckregelventilvorrichtung 1 ist als ein Druckbegrenzungsventil ausgeführt, das in Abhängigkeit eines über ein weiteres Drucksteuerventil des Hydrauliksystems eingestellten Vorsteuerdruckes betätigbar ist und mittels welchem ein Betätigungsdruck für ein als Lamellenkupplung oder Lamellenbremse ausgebildetes Schaltelement einstellbar ist.

Die Aktoreinrichtung 3 der Druckregelventilvorrichtung 1 weist in einem Gehäuse 4 einen Proportionalmagnet 5 auf, dessen Spule 6 in bestromtem Zustand einen Anker 7 mit einer Magnetkraft F_mag beaufschlagt und aus der in Fig. 1 dargestellten Position entgegen der Federkraft einer Federeinrichtung 9 in Richtung eines Anschlages 8 verschiebt.

Der Anker 7 ist mit einem Ventilstößel 10 wirkverbunden, so dass der Anker 7 und der Ventilstößel 10 gemeinsam vom Proportionalmagneten 5 betätigt werden. In Abhängigkeit einer aktuellen Stellung des in gehäusefesten Bauteilen der Druckregelventilvorrichtung 1 längsverschieblich geführten Ventilstößels 10 wird ein erstes Sitzventil 11 und ein zweites Sitzventil 12 geöffnet oder geschlossen.

Das erste Sitzventil 11 ist vorliegend als Kugelsitzventil und das zweite Sitzventil 12 ist als Kegelsitzventil ausgeführt, wobei das erste Sitzventil 11 einen Zulaufbereich 13, der den Druckversorgungsbereich der Druckregelventilvorrichtung 1 darstellt, in geschlossenem Zustand von einem ersten Ablaufbereich 14 trennt und in geöffnetem Zustand eine Versorgung des ersten Ablaufbereiches 14 mit Hydraulikfluid ausgehend vom Zulaufbereich 13 ermöglicht.

Über das zweite Sitzventil 12 ist eine Verbindung zwischen dem ersten Ablaufbereich und einem zweiten Ablaufbereich trennbar, um einen Druck p_VS im ersten Ablaufbereich 14 einstellen zu können. Der zweite Ablaufbereich 15 ist vorliegend mit einem Umgebungsdruck p_∞ aufweisenden Bereich einer als Automatgetriebe ausgebildeten Getriebeeinrichtung verbunden, womit der Druck p_VS des ersten Ablaufbereiches 14 bei geöffnetem zweiten Sitzventil 12 in Abhängigkeit des Öffnungsgrades reduziert wird.

Sowohl das vorliegend mit einer kegelförmigen Dichtfläche ausgeführte Ventilschließglied 16 des zweiten Sitzventils 12 als auch das kugelförmige Ventilschließglied 17 des ersten Sitzventils 11 werden über den in axialer Richtung der Ventileinrichtung 2 verschiebbar angeordneten Ventilstößel 10 bzw. den Anker 7 betätigt, wobei das erste Sitzventil 11 in der in Fig. 1 dargestellten Position des Ankers 7 vollständig am ersten Ventilsitz 18, der im Bereich einer Blende 19 mit einer Blendendicke von 0,4 mm oder kleiner, insbesondere 0,3 mm oder kleiner, ausgebildet ist, vollständig anliegt und das erste Sitzventil 11 geschlossen ist.

Das zweite Sitzventil 12 bzw. das Ventilschließglied 16 des zweiten Sitzventils 12 ist in diesem Betriebszustand der Druckregelventilvorrichtung 1 um den maximalen Hubweg vom zweiten Ventilsitz 20 abgehoben, womit der erste Ablaufbereich 14 drucklos ist bzw. der Druck p_VS des ersten Ablaufbereiches 14 dem Umgebungsdruck p_∞ entspricht.

Stromauf des zwischen dem ersten Ablaufbereich 14 und dem zweiten Ablaufbereich 15 angeordneten zweiten Sitzventils 12 ist eine Stromführungseinrichtung 21 mit einem Einlaufbereich 22 und einem Auslaufbereich 23 zur definierten Stromführung von aus dem Zulaufbereich 13 und/oder dem ersten Ablaufbereich 14 in Richtung des zweiten Sitzventils 12 strömenden Fluids vorgesehen.

Das Fluid wird in der Stromführungseinrichtung 21 zwischen dem Einlaufbereich 22 und dem Auslaufbereich 23 in mehreren über den Umfang der Stromführungseinrichtung 21 verteilt angeordneten und voneinander getrennten Kanalbereichen 24 geführt, welche wenigstens annähernd schraubenförmig ausgebildet sind, so dass dem in Richtung des zweiten Sitzventils 12 strömenden Fluid stromab des Auslaufbereiches 23 eine wenigstens annähernd strudelförmige Strömung bzw. ein Drall aufgeprägt wird. Das Fluid durchströmt die Kanalbereiche 24 mit im Wesentlichen laminarer Strömung, so dass in diesem Bereich eine möglichst verlustarme Durchströmung der Ventileinrichtung 2 vorliegt.

Zwischen dem Auslaufbereich 23 der Stromführungseinrichtung 21 und dem zweiten Sitzventil 12 ist ein Düsenbereich 25 vorgesehen, der sich ausgehend vom Auslaufbereich in Richtung des zweiten Sitzventils 12 kegelförmig verjüngt und der vom Fluid nach dem Austritt des Fluids aus dem Auslaufbereich 23 der Stromführungseinrichtung 21 strudelförmig durchströmt wird. Dabei durchströmt das Fluid den Düsenbereich 25 im Bereich einer den Innenraum 26 des Düsenbereiches begrenzenden Düseninnenfläche mit einer dünnfilmigen Strömung. An den sich verjüngenden Durchmesserbereich des Düsenbereiches 25 schließt sich ein wenigstens annähernd hohlzylindrischer Übergangsbereich 27 an, der wiederum zwischen dem sich verjüngenden Durchmesserbereich des Düsenbereiches 25 und einem Diffusorbereich 28 angeordnet ist, der in den zweiten Ventilsitz 20 übergeht.

Die vorbeschriebene Ausgestaltung der Stromführungseinrichtung 21 in Verbindung mit dem Düsenbereich 25 sowie den sich daran anschließenden Übergangsbereich 27 und Diffusorbereich 28 führt dazu, dass die drallförmige bzw. strudelförmige Strömung des Fluids in geöffnetem Zustand des zweiten Sitzventils 12 den zweiten Ventilsitz 20 tangential zur Kegelfläche des Ventilschließgliedes 16 des zweiten Sitzventils 12 und der Dichtfläche des Ventilsitzes 20 mit geringen Strömungsverlusten durchströmt.

Mittels der vorbeschriebenen erzwungenen Strömung werden Druckschwankungen im Zulaufbereich 13 reduziert bzw. aus den Druckschwankungen resultierende Schwingungen gedämpft, da die Störenergie im Bereich der Stromführungseinrichtung 21 aufgrund der Drallaufprägung in größerem Umfang absorbiert wird als bei herkömmlich ausgeführten Ventilvorrichtungen bzw. Kupplungsventilen.

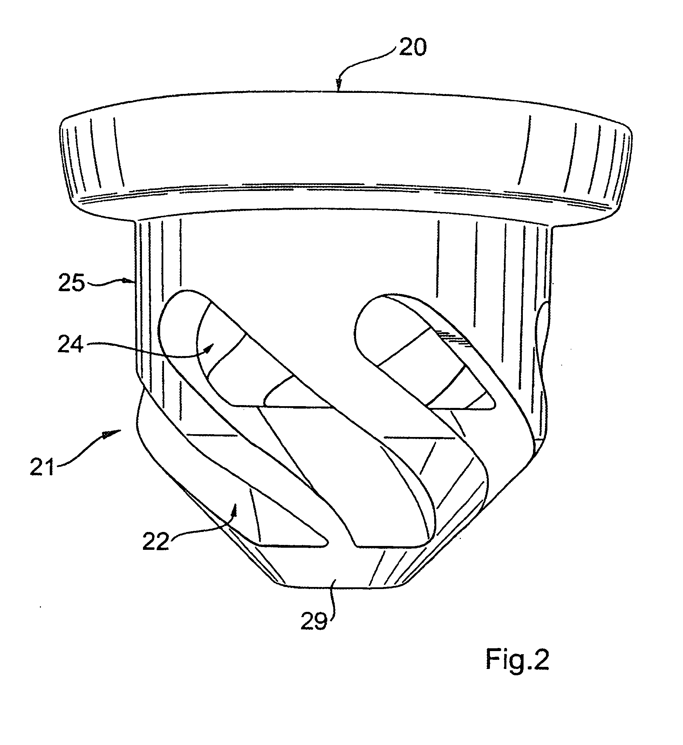

Fig. 2 zeigt ein erstes Ausführungsbeispiel der Stromführungseinrichtung 21, bei welchem der die Kanalbereiche 24 aufweisende Teil der Stromführungseinrichtung 21 einstückig mit dem Düsenbereich 25 und dem Ventilsitz 20 des zweiten Sitzventils 12 ausgebildet ist. Damit weist der erste Teil der Stromführungseinrichtung 21 schraubenförmige Einfräsungen auf, welche von einer Spitze 29 der Stromführungseinrichtung 21 in axialer Richtung der Stromführungseinrichtung zunächst von einem inneren Bereich nach außen verlaufen, die Wandung der Stromführungseinrichtung durchdringen und zwischen der Umgebung der Stromführungseinrichtung 21 und dem Düseninnenraum 26 eine Verbindung herstellen. Aufgrund dieser Ausgestaltung der Kanalbereiche 24 wird dem die Stromführungseinrichtung 21 durchströmenden Fluid der gewünschte Drall bzw. die strudelförmige Strömung aufgeprägt.

Durch den Strömungsdrall werden Abweichungen von einer symmetrischen Strömung des Fluids reduziert und an dem Ventilschließglied 16 des zweiten Sitzventils 12 sowie dem Ventilstößel 10 angreifende Querkräfte herabgesetzt, welche die Funktionsweise der Druckregelventilvorrichtung nachteilig beeinflussen. Die Nachteile resultieren aus im Bereich der Gleitlagerungen des Ventilstößels 10 sowie im Bereich zwischen der kegelförmigen Dichtfläche des Ventilschließgliedes 16 des zweiten Sitzventils 12 und dem Ventilsitz 20 während eines Schließ- oder Öffnungsvorganges des zweiten Sitzventils 12 auftretenden Reibungskräfte, die zur Vergrößerung der Hysterese der Druckregelventilvorrichtung 1 beitragen.

Zusätzlich klingt bei der Druckregelventileinrichtung 1 durch den im Bereich der Stromführungseinrichtung 21 erzeugten Strömungsdrall eine Schwingungsanregung des Ventilstößels 10 im Vergleich zu aus der Praxis bekannten Druckregelventilen, die jeweils mit einem Dämpfungselement ausgebildet sind, auch ohne ein solches Dämpfungselement schneller ab. Damit steht der über die Druckregelventilvorrichtung eingestellte Druck p_VS des ersten Ablaufbereiches 14 früher für die Betätigung eines mit dem Druck p_VS beaufschlagten Kupplungsventils und somit für die Betätigung eines Schaltelementes einer Automatikgetriebeeinrichtung zur Verfügung. Zudem werden die durch die Schwingungsanregung des Ventilstößels ausgelösten Druckschwingungen in vermindertem Umfang bzw. über einen kürzeren Zeitraum erzeugt und daher auch über einen kürzeren Zeitraum ins System eingeleitet.

Durch die verbesserte Schwingungsstabilität der Druckregelventilvorrichtung 1 wird auch ein sogenanntes Sitzprellen im Bereich des zweiten Sitzventils 12 vermieden bzw. in wesentlichem Umfang reduziert, womit die Lebensdauer der Druckregelventilvorrichtung 1 im Vergleich zu bekannten Kupplungsventilen verlängert wird. Das Sitzprellen tritt bei herkömmlichen Kupplungsventilen bzw. Ventilvorrichtungen besonders bei geringen Öffnungshüben eines Ventilschließgliedes eines Sitzventils auf, wenn Anregungen bzw. Schwingungen des Ventilschließgliedes und des damit wirkverbundenen Ventilstößels, deren Amplituden im Bereich der Öffungshübe liegen, zu einem kurzzeitigen, ungedämpften und daher unerwünschten Anlegen des Ventilschließgliedes an den Ventilsitz führen, wobei in solchen Betriebszuständen eines Druckregelventils im Bereich eines Sitzventils hohe Belastungen auftreten, die die Funktionsweise eines Kupplungsventils und somit eines Automatgetriebes auf Dauer nachteilig beeinflussen.

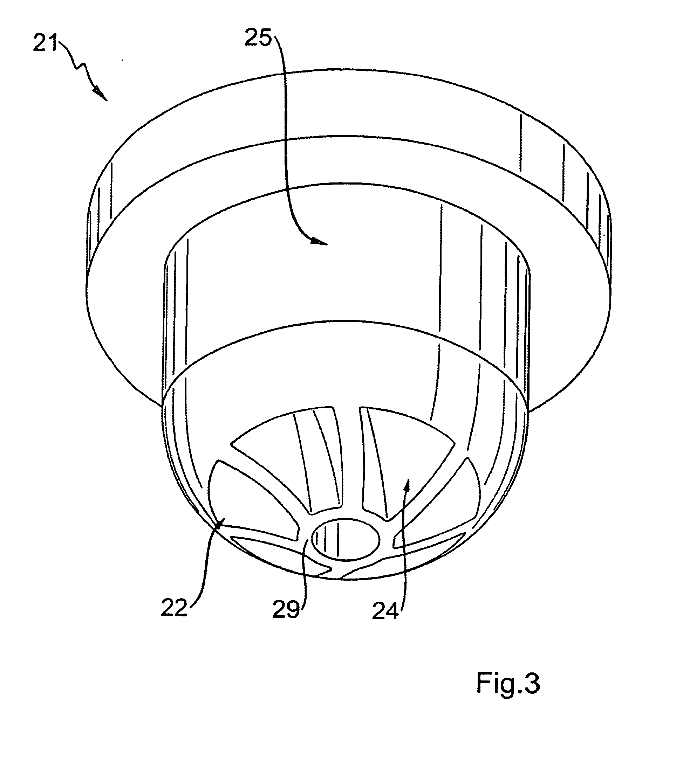

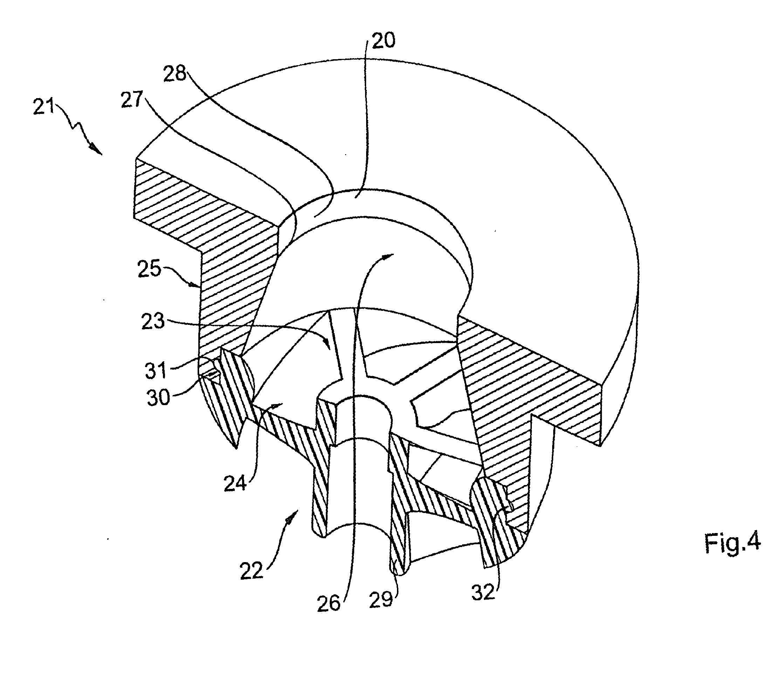

In Fig. 3 und Fig. 4 ist ein zweites Ausführungsbeispiel der Stromführungseinrichtung 21 gezeigt, bei dem der Düsenbereich 25 und der die Kanalbereiche 24 aufweisende Teil der Stromführungseinrichtung 21 aus unterschiedlichen Materialien hergestellt und über eine Clipsverbindung 30 miteinander verbunden sind. Während der Montage wird der Düsenbereich 25 über den die Kanalbereiche 24 aufweisenden Teil der Stromführungseinrichtung 21 aufgeschoben und rastet mit einer umlaufenden Ringnut an einer ringförmigen Erhebung 32 ein. Der vorliegend mit dem zweiten Ventilsitz 20 des zweiten Sitzventils 12 ausgeführte Düsenbereich 25 ist aus Metall, vorzugsweise aus Messing, hergestellt, während der die Kanalbereiche 24 aufweisende Teil der Stromführungseinrichtung 21 aus Kunststoff hergestellt ist.

Die in Fig. 3 und Fig. 4 dargestellte zweite Ausführungsform der Stromführungseinrichtung 21 ist im Vergleich zu der in Fig. 2 dargestellten ersten Ausführungsform kostengünstiger herstellbar, wobei mittels des aus Metall gebildeten Düsenbereiches 25 eine hohen Lebensdauer der Druckregelventilvorrichtung 1 erreicht wird.

Neben den vorbeschriebenen Maßnahmen ist die Drallströmung bzw. die strudelförmige Strömung des Fluids im Bereich des zweiten Ventilsitzes 20 des zweiten Sitzventils 12 auch in Abhängigkeit der axialen Länge der kegelförmigen Dichtfläche des Ventilschließgliedes 16 des zweiten Sitzventils 12 variierbar. So ist die Strömung des zweiten Sitzventils 12 bei einer längeren Ausführung der kegelförmigen Dichtfläche des Ventilschließgliedes 16, die eine vergrößerte Auftrefffläche für das mit dem Drall strömende Hydraulikfluidvolumen aufweist, im Vergleich zu kürzeren Ausgestaltungen weiter verbessert und die Druckregelventilvorrichtung durch ein schnelleres Ansprechverhalten gekennzeichnet.

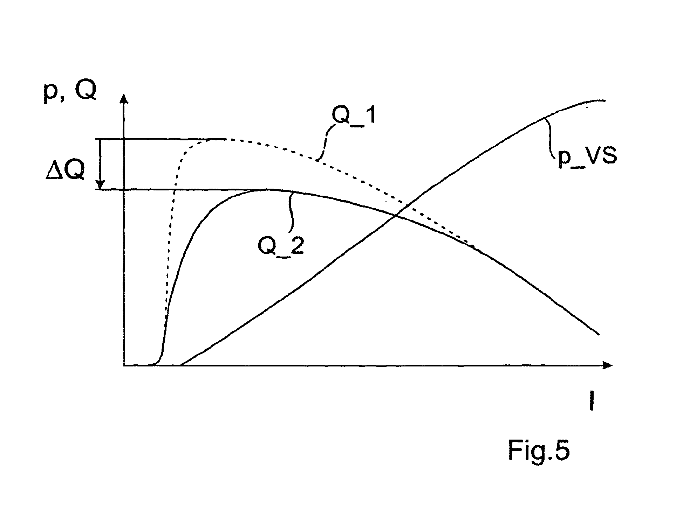

In Fig. 5 ist die Abhängigkeit zwischen einem über ein herkömmliches Druckregelventil führbaren Volumenstrom Q_1 und einem Ansteuerstrom I einer das Kupplungsventil betätigenden Aktoreinrichtung in Form eines graphischen Verlaufes dargestellt. Diesem Verlauf ist ein weiterer Verlauf gegenübergestellt, der die Abhängigkeit zwischen einem über die Druckregelventilvorrichtung 1 gemäß Fig. 1 führbaren Volumenstrom Q_2 und einem Ansteuerstrom I der die Ventileinrichtung 2 betätigenden Aktoreinrichtung 3 graphisch darstellt. Der Verlauf des Volumenstromes Q_1, der über das aus der Praxis bekannte Kupplungsventil führbar ist, ist als strichlierte Linie ausgeführt, während der Verlauf des Volumenstromes Q_2, der über die Druckregelventilvorrichtung 1 führbar ist, als durchgezogene Linie dargestellt ist.

Zusätzlich ist auch die Abhängigkeit zwischen dem Druck p_VS im Bereich des ersten Ablaufbereiches 14 über dem Ansteuerstrom I und den jeweils über die bekannte Druckregelventilvorrichtung fließenden Volumenströmen Q_1 bzw. Q_2 gezeigt. Die den Verläufen des Volumenstromes Q_1 bzw. Q_2 und des Druckes p_VS zugrunde liegende Temperatur ist 45°C.

Anhand der grafischen Gegenüberstellung der Verläufe des Volumenstromes Q_1 bzw. Q_2 ergibt sich, dass der über die Druckregelventilvorrichtung 1 geführte Volumenstrom Q_2 kleiner als der Volumenstrom Q_1 ist, der bei gleichem Ansteuerstrom I zu führen ist, um im ersten Ablaufbereich 14 jeweils den selben Druckwert p_VS zu erzeugen. Mit ΔQ ist hierbei die Differenz der Maxima der Volumenströme Q_1 und Q_2 bezeichnet und verdeutlicht.

Eine den im Zulaufbereich 13 vorliegenden Versorgungsdruck zur Verfügung stellende Hydraulikpumpe ist in Verbindung mit der Druckregelventilvorrichtung 1 mit einer geringeren Förderleistung als bei herkömmlichen Kupplungsventilen betreibbar, womit insgesamt eine kleinere, kostengünstigere und einen geringeren Bauraumbedarf aufweisende Hydraulikpumpe erforderlich ist. Zusätzlich ist der Leckagefluidvolumenstrom der Druckregelventilvorrichtung 1 im Vergleich zu einem bekannten Druckregelventil aufgrund des reduzierten Fördervolumenstromes der Hydraulikpumpe herabgesetzt.

Des Weiteren weist die Druckregelventilvorrichtung 1 bei der Referenztemperatur von 45°C und bei reduzierter Durchflussmenge dasselbe Ansprechverhalten wie ein aus der Praxis bekanntes Druckregelventil auf. In niedrigeren Temperaturbereichen zeigt die Druckregelventilvorrichtung 1 sogar ein wesentlich besseres Ansprechverhalten als eine herkömmliche Ventilvorrichtung, wobei insbesondere bei Temperaturen von -10°C oder -20°C wesentliche Verbesserungen des Ansprechverhaltens der Druckregelventilvorrichtung 1 erkennbar sind.

Grundsätzlich sind mit der Druckregelventilvorrichtung nach der Erfindung neben der vorbeschriebenen Einstellung von Betätigungsdrücken für Schaltelemente von Automatgetrieben auch hydraulische Arbeitsdrücke für verschiedene andere hydraulische Verbraucher mit geringem konstruktivem Aufwand hochdynamisch und mit hoher Präzision einstellbar.

### Bezugszeichen

- 1: Druckregelventilvorrichtung
- 2: Ventileinrichtung
- 3: Aktoreinrichtung
- 4: Gehäuse
- 5: Proportionalmagnet
- 6: Spule
- 7: Anker
- 8: Anschlag
- 9: Federeinrichtung
- 10: Ventilstößel
- 11: erstes Sitzventil
- 12: zweites Sitzventil
- 13: Zulaufbereich
- 14: erster Ablaufbereich
- 15: zweiter Ablaufbereich
- 16: Ventilschließglied des zweiten Sitzventils
- 17: Ventilschließglied des ersten Sitzventils
- 18: Ventilsitz des ersten Sitzventils
- 19: Blende
- 20: Ventilsitz des zweiten Sitzventils
- 21: Stromführungseinrichtung
- 22: Einlaufbereich
- 23: Auslaufbereich
- 24: Kanalbereich
- 25: Düsenbereich
- 26: Düseninnenraum
- 27: Übergangsbereich
- 28: Diffusorbereich
- 29: Spitze der Stromführungseinrichtung
- 30: Clipsverbindung
- 31: Ringnut
- 32: Erhebung
- F_mag: Magnetkraft
- I: Ansteuerstrom
- p_VS: Druck des ersten Ablaufbereiches
- p_∞: Druck des zweiten Ablaufbereiches
- Q: Volumenstrom

## Patentansprüche

1. Druckregelventilvorrichtung (1) mit wenigstens einem Zulaufbereich (13) und einem ersten Ablaufbereich (14) und mindestens einem zweiten Ablaufbereich (15), die über zwei Sitzventile (11, 12) miteinander verbindbar sind, wobei stromauf des zwischen dem ersten Ablaufbereich (14) und dem zweiten Ablaufbereich (15) angeordneten zweiten Sitzventils (12) eine Stromführungseinrichtung (21) mit einem Einlaufbereich (22) und einem in axialer Ersteckung der Stromführungseinrichtung (21) dazu beabstandeten Auslaufbereich (23) zur definierten Strömungsführung von aus dem Zulaufbereich (13) in Richtung des zweiten Sitzventils (12) strömenden Fluids vorgesehen ist, **dadurch gekennzeichnet, dass** die Stromführungseinrichtung (21) mit mehreren voneinander getrennten Kanalbereichen (24) derart versehen ist, dass das durch die Kanalbereiche (24) der Stromführungseinrichtung (21) in Richtung des zweiten Sitzventils (12) strömende Fluid stromab des Auslaufbereiches (23) in einen Drall versetzt wird.

2. Druckregelventilvorrichtung nach Anspruch 1, **dadurch gekennzeichnet, dass** die Kanalbereiche dem in Richtung des zweiten Sitzventils (12) strömenden Fluid stromab des Auslaufbereiches (23) eine wenigstens annähernd strudelförmige Strömung aufprägen.

3. Druckregelventilvorrichtung nach Anspruch 1 oder 2, **dadurch gekennzeichnet, dass** die Kanalbereiche (24) wenigstens annähernd schraubenförmig ausgebildet sind.

4. Druckregelventilvorrichtung nach einem der vorhergehenden Ansprüche, **dadurch gekennzeichnet, dass** das Fluid mit im Wesentlichen laminarer Strömung durch die Kanalbereiche (24) strömt.

5. Druckregelventilvorrichtung nach einem der vorhergehenden Ansprüche, **dadurch gekennzeichnet, dass** die Kanalbereiche (24) durch Stegbereiche voneinander getrennt sind, deren Stegdicken sich vom Einlaufbereich (22) bis zum Auslaufbereich (23) stetig verjüngen.

6. Druckregelventilvorrichtung nach Anspruch 5, **dadurch gekennzeichnet, dass** Stirnflächen der Stegbereiche im Einlaufbereich abgerundet ausgebildet sind.

7. Druckregelventilvorrichtung nach einem der vorhergehenden Ansprüche, **dadurch gekennzeichnet, dass** zwischen dem Auslaufbereich (23) der Stromführungseinrichtung (21) und dem zweiten Sitzventil (12) ein Düsenbereich (25) vorgesehen ist.

8. Druckregelventilvorrichtung nach Anspruch 7, **dadurch gekennzeichnet, dass** sich der Düsenbereich (25) ausgehend vom Auslaufbereich (23) in Richtung des zweiten Sitzventils (12) kegelförmig verjüngt.

9. Druckregelventilvorrichtung nach Anspruch 8, **dadurch gekennzeichnet, dass** sich an den verjüngenden Durchmesserbereich des Düsenbereiches (25) ein wenigstens annähernd hohlzylindrischer Übergangsbereich (27) anschließt.

10. Druckregelventilvorrichtung nach Anspruch 9, **dadurch gekennzeichnet, dass** sich an den hohlzylindrischen Übergangsbereich (27) des Düsenbereiches (25) ein Diffusorbereich (28) anschließt, der in den zweiten Ventilsitz übergeht.

11. Druckregelventilvorrichtung nach einem der Ansprüche 7 bis 10, **dadurch gekennzeichnet, dass** der Düsenbereich (25) und der die Kanalbereiche (24) aufweisende Teil der Stromführungseinrichtung (21) aus unterschiedlichen Materialien hergestellt sind.

12. Druckregelventilvorrichtung nach einem der Ansprüche 7 bis 11, **dadurch gekennzeichnet, dass** der Düsenbereich (25) und der die Kanalbereiche (24) aufweisende Teil der Stromführungseinrichtung (21) über eine Clipsverbindung (30) miteinander verbunden sind.

13. Druckregelventilvorrichtung nach einem der vorhergehenden Ansprüche, **dadurch gekennzeichnet, dass** das Fluid einen Ventilsitz (20) des zweiten Sitzventils (12) wenigstens annähernd in der Tangentialebene eines mit dem Ventilsitz (20) des zweiten Sitzventils (12) zusammenwirkenden Bereiches einer Dichtfläche eines Ventilschließgliedes (16) durchströmt.

14. Druckregelventilvorrichtung nach Anspruch 13, **dadurch gekennzeichnet, dass** ein mit dem Ventilschließglied (16) wirkverbundener Ventilstößel (10) im Bereich des die Kanalbereiche (24) aufweisenden Teils der Stromführungseinrichtung (21) längsbeweglich geführt ist.

15. Druckregelventilvorrichtung nach einem der vorhergehenden Ansprüche, **dadurch gekennzeichnet, dass** das erste Sitzventil (11) mit einem Kugelsitz ausgebildet ist und eine den Ventilsitz (18) ausbildende Blende (19) mit einer Blendendicke ≤ 0,4 mm, insbesondere ≤ 0,3 mm, ausgeführt ist.

16. Druckregelventilvorrichtung nach einem der vorhergehenden Ansprüche 1 bis 15, **dadurch gekennzeichnet, dass** das zweite Sitzventil (12) mit einem Kegelsitz ausgeführt ist.

17. Druckregelventilvorrichtung nach einem der Ansprüche 1 bis 15, **dadurch gekennzeichnet, dass** das zweite Sitzventil mit einem Kugelsitz ausgebildet ist.

18. Druckregelventilvorrichtung nach einem der Ansprüche 1 bis 15, **dadurch gekennzeichnet, dass** das zweite Sitzventil mit einem Flachsitz ausgeführt ist.

## Claims

1. Pressure-regulating valve device (1) with at least one inflow region (13) and with a first outflow region (14) and at least one second outflow region (15) which are connectable to one another by two seat valves (11, 12), there being provided upstream of the second seat valve (12), arranged between the first outflow region (14) and the second outflow region (15), a flow guide device (21) with an inflow region (22) and with an outflow region (23) spaced apart from the latter along the axial extent of the flow guide device (21), for the defined flow guidance of fluid flowing out of the inflow region (13) in the direction of the second seat valve (12), **characterized in that** the flow guide device (21) is provided with a plurality of channel regions (24) separated from one another, in such a way that the fluid flowing through the channel regions (24) of the flow guide device (21) in the direction of the second seat valve (12) is swirled downstream of the outflow region (23).

2. Pressure-regulating valve device (1) according to Claim 1, **characterized in that** the channel regions in part, downstream of the outflow region (23), in at least approximately whirlpool-like flow to the fluid flowing in the direction of the second seat valve (12).

3. Pressure-regulating valve device according to Claim 1 or 2, **characterized in that** the channel regions (24) are of at least approximately helical design.

4. Pressure-regulating valve device according to one of the preceding claims, **characterized in that** the fluid flows through the channel regions (24) with an essentially laminar flow.

5. Pressure-regulating valve device according to one of the preceding claims, **characterized in that** the channel regions (24) are separated from one another by web regions, the web thicknesses of which taper continuously from the inflow region (22) as far as the outflow region (23).

6. Pressure-regulating valve device according to Claim 5, **characterized in that** end faces of the web regions in the inflow region are of rounded form.

7. Pressure-regulating valve device according to one of the preceding claims, **characterized in that** a nozzle region (25) is provided between the outflow region (23) of the flow guide device (21) and the second seat valve (12).

8. Pressure-regulating valve device according to Claim 7, **characterized in that** the nozzle region (25) tapers conically from the outflow region (23) in the direction of the second seat valve (12).

9. Pressure-regulating valve device according to Claim 8, **characterized in that** the tapering diametral region of the nozzle region (25) is followed by an at least approximately hollow-cylindrical transitional region (27).

10. Pressure-regulating valve device according to Claim 9, **characterized in that** the hollow-cylindrical transitional region (27) of the nozzle region (25) is followed by a diffuser region (28) which merges into the second valve seat.

11. Pressure-regulating valve device according to one of Claims 7 to 10, **characterized in that** the nozzle region (25) and that part of the flow guide device (21) which has the channel regions (24) are produced from different materials.

12. Pressure-regulating valve device according to one of Claims 7 to 11, **characterized in that** the nozzle region (25) and that part of the flow guide device (21) which has the channel regions (24) are connected to one another via a snap connection (30).

13. Pressure-regulating valve device according to one of the preceding claims, **characterized in that** the fluid flows through a valve seat (20) of the second seat valve (12) at least approximately in the tangential plane of a region, cooperating with the valve seat (20) of the second seat valve (12), of a sealing face of a valve-closing member (16).

14. Pressure-regulating valve device according to Claim 13, **characterized in that** a valve tappet (10) operatively connected to the valve-closing member (16) is guided longitudinally movably in the region of that part of the flow guide device (21) which has the channel regions (24).

15. Pressure-regulating valve device according to one of the preceding claims, **characterized in that** the first seat valve (11) is designed with a spherical seat, and a diaphragm (19) forming the valve seat (18) is designed with a diaphragm thickness ≤ 0.4 mm, in particular ≤ 0.3 mm.

16. Pressure-regulating valve device according to one of the preceding Claims 1 to 15, **characterized in that** the second seat valve (12) is designed with a conical seat.

17. Pressure-regulating valve device according to one of Claims 1 to 15, **characterized in that** the second seat valve is designed with a spherical seat.

18. Pressure-regulating valve device according to one of Claims 1 to 15, **characterized in that** the second seat valve is designed with a flat seat.

## Revendications

1. Dispositif de soupape de régulation de pression (1) comprenant au moins une région d'entrée (13) et une première région d'évacuation (14) et au moins une deuxième région d'évacuation (15), qui peuvent être connectées l'une à l'autre par le biais de deux soupapes à siège (11, 12), dans lequel, en amont de la deuxième soupape à siège (12) disposée entre la première région d'évacuation (14) et la deuxième région d'évacuation (15), est prévu un dispositif de guidage de l'écoulement (21) avec une région d'entrée (22) et une région de sortie (23) espacée dans l'étendue axiale du dispositif de guidage de l'écoulement (21) par rapport à celui-ci pour le guidage défini de l'écoulement du fluide s'écoulant depuis la région d'entrée (13) dans la direction de la deuxième soupape à siège (12), **caractérisé en ce que** le dispositif de guidage de l'écoulement (21) est pourvu de plusieurs régions de canaux (24) séparées les unes des autres de telle sorte que le fluide s'écoulant à travers les régions de canaux (24) du dispositif de guidage de l'écoulement (21) dans la direction de la deuxième soupape à siège (12) soit animé d'un mouvement de rotation en aval de la région de sortie (23).

2. Dispositif de soupape de régulation de pression selon la revendication 1, **caractérisé en ce que** les régions de canaux confèrent au fluide s'écoulant dans la direction de la deuxième soupape à siège (12) en aval de la région de sortie (23) un écoulement au moins approximativement en forme de tourbillon.

3. Dispositif de soupape de régulation de pression selon la revendication 1 ou 2, **caractérisé en ce que** les régions de canaux (24) sont réalisées au moins approximativement en forme d'hélice.

4. Dispositif de soupape de régulation de pression selon l'une quelconque des revendications précédentes, **caractérisé en ce que** le fluide s'écoule à travers les régions de canaux (24) avec un écoulement sensiblement laminaire.

5. Dispositif de soupape de régulation de pression selon l'une quelconque des revendications précédentes, **caractérisé en ce que** les régions de canaux (24) sont séparées les unes des autres par des régions de nervure dont les épaisseurs de nervure diminuent constamment depuis la région d'entrée (22) jusqu'à la région de sortie (23).

6. Dispositif de soupape de régulation de pression selon la revendication 5, **caractérisé en ce que** des faces frontales des régions de nervure sont réalisées sous forme arrondie dans la région d'entrée.

7. Dispositif de soupape de régulation de pression selon l'une quelconque des revendications précédentes, **caractérisé en ce qu'**une région de buse (25) est prévue entre la région de sortie (23) du dispositif de guidage de l'écoulement (21) et la deuxième soupape à siège (12).

8. Dispositif de soupape de régulation de pression selon la revendication 7, **caractérisé en ce que** la région de buse (25) se rétrécit en forme de cône depuis la région de sortie (23) dans la direction de la deuxième soupape à siège (12).

9. Dispositif de soupape de régulation de pression selon la revendication 8, **caractérisé en ce qu'**une région de transition (27) au moins approximativement cylindrique creuse se raccorde à la région de diamètre rétréci de la région de buse (25).

10. Dispositif de soupape de régulation de pression selon la revendication 9, **caractérisé en ce qu'**une région de diffuseur (28), qui se prolonge par le deuxième siège de soupape, se raccorde à la région de transition cylindrique creuse (27) de la région de buse (25).

11. Dispositif de soupape de régulation de pression selon l'une quelconque des revendications 7 à 10, **caractérisé en ce que** la région de buse (25) et la partie du dispositif de guidage de l'écoulement (21) présentant les régions de canaux (24) sont fabriquées en matériaux différents.

12. Dispositif de soupape de régulation de pression selon l'une quelconque des revendications 7 à 11, **caractérisé en ce que** la région de buse (25) et la partie du dispositif de guidage de l'écoulement (21) présentant les régions de canaux (24) sont connectées l'une à l'autre par une connexion par enclipsage (30).

13. Dispositif de soupape de régulation de pression selon l'une quelconque des revendications précédentes, **caractérisé en ce que** le fluide traverse un siège de soupape (20) de la deuxième soupape à siège (12) au moins approximativement dans le plan tangentiel d'une région d'une surface d'étanchéité d'un organe de fermeture de soupape (16) coopérant avec le siège de soupape (20) de la deuxième soupape à siège (12).

14. Dispositif de soupape de régulation de pression selon la revendication 13, **caractérisé en ce qu'**un poussoir de soupape (10) en liaison fonctionnelle avec l'organe de fermeture de soupape (16) est guidé de manière déplaçable longitudinalement dans la région de la partie du dispositif de guidage de l'écoulement (21) présentant les régions de canaux (24).

15. Dispositif de soupape de régulation de pression selon l'une quelconque des revendications précédentes, **caractérisé en ce que** la première soupape à siège (11) est réalisée avec un siège sphérique et un obturateur (19) formant le siège de soupape (18) est réalisé avec une épaisseur d'obturateur ≤ 0,4 mm, notamment ≤ 0,3 mm.

16. Dispositif de soupape de régulation de pression selon l'une quelconque des revendications précédentes 1 à 15, **caractérisé en ce que** la deuxième soupape à siège (12) est réalisée avec un siège conique.

17. Dispositif de soupape de régulation de pression selon l'une quelconque des revendications 1 à 15, **caractérisé en ce que** la deuxième soupape à siège est réalisée avec un siège sphérique.

18. Dispositif de soupape de régulation de pression selon l'une quelconque des revendications 1 à 15, **caractérisé en ce que** la deuxième soupape à siège est réalisée avec un siège plat.
